# EUROPEAN PATENT APPLICATION

(11) **EP 0 860 829 A2**
(43) Date of publication of application: **26.08.1998**
(21) Application number: 98102915.0
(22) Date of filing: 19.02.1998
(51) Int. Cl.: G11B 27/10, G11B 27/32, H04N 5/783, H04N 9/804

(54) **Video signal recording and reproducing apparatus**

(30) Priority: 21.02.1997 JP 37384/97
(71) Applicant: HITACHI, LTD., Chiyoda-ku, Tokyo 100 (JP)
(72) Inventor: Todaka, Yoshihiro, Yokohama-shi (JP); Nagayama, Keiji, Hitachinaka-shi (JP); Chiba, Hiroshi, Yokohama-shi (JP)
(74) Representative: Altenburg, Udo, Dipl.-Phys.

(57) **Abstract**

In a digital video and audio signal recording and reproducing apparatus for recording data of a large amount such as moving picture video signal data and still picture video signal data on a recording media (150) which can be accessed randomly, data can be reproduced in the recording order similar to a tape media and a series of data randomly selected can be reproduced. Since the recording media (150) that can be randomly accessed has provided thereon a recording order management file (152) for managing the recording order, while data can be reproduced in the recording order at any time as in the tape image after the recording media (150) was edited, a list is rearranged from a list of latest recording order into a list of an arbitrary reproduction order or a file is moved and set in a different folder.

## Description

### BACKGROUND OF THE INVENTION

The present invention relates to an operability of a portable digital video camera.

Heretofore, there has been an electronic photography system, i.e. what might be called an electronic still camera in which a still picture signal is recorded on a semiconductor memory as disclosed in Japanese laid-open patent application No. JP-A-2-292974. Recently, as personal computers are popularized, recording mediums such as semiconductor memories and hard disks become inexpensive and become large in storage capacity. On the other hand, in accordance with a progress of signal compression techniques represented by an encoding system of a so-called JPEG (Joint Photographic Experts Group) or an encoding system of an MPEG (Moving Pictures Experts Group) 1, even small devices become able to record much more still pictures and even moving pictures. At present, there is realized a hard disk of a card size having a storage capacity of about 300 Mbytes. In this case, with respect to the still picture, it becomes possible to record about 3,000 shots of still pictures when an image of each shot is compressed by the JPEG of about 640 x 480 pixels. Also, it becomes possible to record a moving picture about 20 minutes when a moving picture is compressed by the MPEG1 of about 1.5 Mbytes/second.

As described above, when an amount of recorded data is large or there are many recorded images, an operability becomes considerably different depending upon the manner of retrieving, classifying and displaying recorded data. Specifically, in a tape media generally used by a VTR (Video Tape Recorder) or the like, data of a large amount cannot be reproduced randomly and freely so that a retrieval property thereof is low. However, the memory card, the HDD or the like can reproduce data randomly and instantly. Accordingly, to improve an operability such as how to retrieve data at high speed and with ease by using the memory card and the HDD is an important factor for making a recording and reproducing apparatus become convenient.

However, Japanese laid-open patent application No. JP-A-2-292974 describes the manner in which data of a large amount are recorded on an IC card but does not describe the manner of how to handle data of a large amount, e.g. a means for retrieving data of a large amount at high speed and with ease. In this example, there was disclosed only a method of retrieving and reproducing data by visually confirming all reproduced pictures upon retrieval.

According to the prior-art method, when a JPEG still picture having about 3,000 shots of recorded still pictures is handled, if a reproduced picture is decoded, displayed and retrieved, then it takes about 1 second to decode one still picture. Thus, it takes about one hour to visually confirm all still pictures, which is not convenient in actual practice.

### SUMMARY OF THE INVENTION

In view of the aforesaid aspect, it is an object of the present invention to provide a means in which the aforementioned problems encountered with the prior art can be solved by using a recording media such as a hard disk (HDD) capable of recording data of a large amount and in which data can be retrieved and displayed with ease. In that case, even when a still picture and a moving picture are recorded freely by using a random access property of recording media, there can be obtained a convenient apparatus as same as the conventional video camera. Also, an image that is freely recorded at any time point can be immediately reproduced and the reproducing order can be set freely. Thus, it is another object of the present invention to provide an image and audio recording and reproducing apparatus in which an operation that can be realized only by an edit function can be realized with ease.

In order to attain the above-mentioned objects, the present invention includes the following two arrangements:
1. A recording order priority reproducing means for realizing elapsed recording and reproduction of image and sounds when it is assumed (tape image) that a recording file which memorizes a recording order upon recording image and sounds is recorded on a recording media and recorded on and reproduced from a conventional magnetic tape; and
2. A media priority reproducing means for reproducing data based on location information data in which a location of data of information of a recording media is recorded within the recording media.

### BRIEF DESCRIPTION OF THE DRAWINGS

These and other features, objects and advantages of the present invention will become more apparent from the following description when taken in conjunction with the accompanying drawings wherein:
FIG. 1 is a state transition diagram showing a video signal recording and reproducing apparatus according to an embodiment of the present invention;
FIG. 2 is a block diagram showing a video signal recording and reproducing apparatus according to an embodiment of the present invention;
FIG. 3 is a schematic diagram used to explain the video signal recording and reproducing apparatus shown in FIG. 2;
FIG. 4 is a schematic diagram used to explain the video signal recording and reproducing apparatus shown in FIG. 2;
FIGS. 5(A) and 5(B) are schematic diagrams showing the embodiment according to the present invention, respectively;
FIGS. 6(A) and 6(B) are schematic diagrams showing the embodiment according to the present invention, respectively;
FIG. 7 is a state transition diagram showing the embodiment according to the present invention; and
FIG. 8 is a state transition diagram showing the embodiment according to the present invention.

### DETAILED DESCRIPTION OF THE PREFERRED EMBODIMENTS

The present invention will now be described with reference to the drawings.

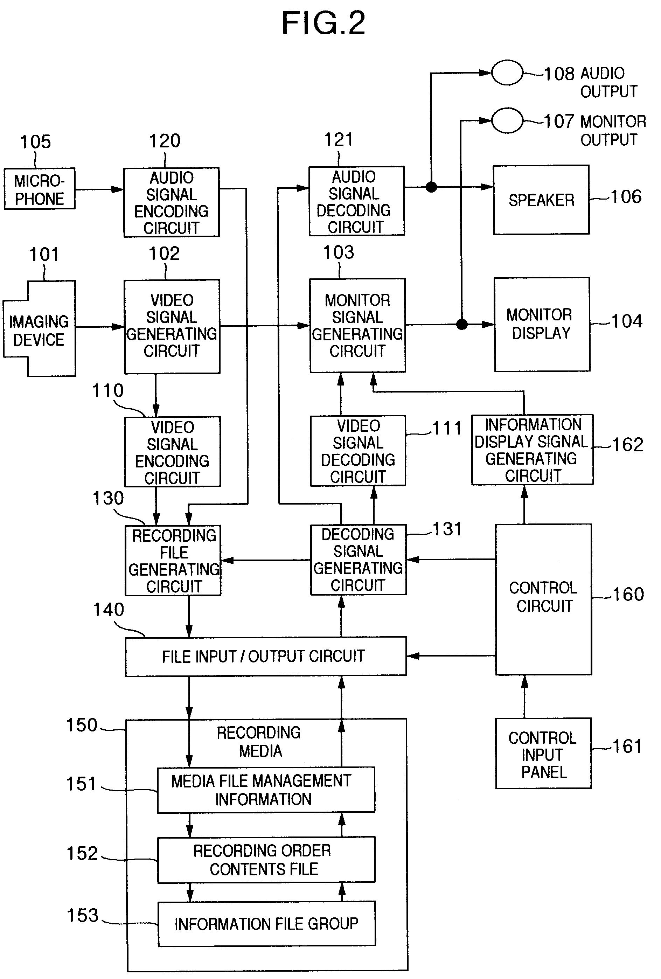

Initially, a first embodiment according to the present invention will be described with reference to a block diagram of FIG. 2.

Referring to FIG. 2, an object image which is focused on a light-receiving screen by a lens (not shown) is picked up by an imaging device 101. A video signal generating circuit 102 processes a signal read out from the imaging device 101 to generate a video signal. The video signal from the video signal generating circuit 102 is compression-encoded by a video signal encoding circuit 110. An encoded signal from the video signal encoding circuit 110 is supplied to a recording file generating circuit 130 and thereby generated as a file for recording on a recording media. A microphone 105 picks up sounds or the like, and an audio signal from the microphone 105 is compression-encoded by an audio signal encoding circuit 120. An output signal from the audio signal encoding circuit 120 is converted by the recording file generating circuit 130 into a recording file.

A signal from the recording file generating circuit 130 is recorded on or reproduced from a recording media 150 by a file input/output circuit 140. A location of data recorded on the recording media 150 is managed by media file management information 151. The file input/output circuit 140 inputs data in and outputs data from the recording media 150 based on information of the media file management information 151. A recording order contents file 152 records the sequential order in which data such as recorded data are recorded. The recording order contents file 152 is recorded on the recording media 150. An information file group 153 indicates data recorded on the recording media 150, and the location of the information file group 153 is managed by the media file management information 151. A decoding signal generating circuit 131 converts file, which is obtained from the recording media 150 by the file input/output circuit 140, into data string for decoding a video or audio signal. A video signal decoding circuit 111 is adapted to decode data from the decoding signal generating circuit 131 to generate a video signal. An audio signal decoding circuit 121 decodes decoding audio signal data outputted from the decoding signal generating circuit 131 to generate an audio signal. The audio signal outputted from the audio signal decoding circuit 121 is emanated from a speaker 106 to the outside as sounds. Simultaneously, the audio signal outputted from the audio signal decoding circuit 121 is outputted from an audio output terminal 108 to the outside as an audio signal output. A monitor signal generating circuit 103 is adapted to generate a monitor signal, which is used to display a video signal on a display apparatus such as a monitor, based on the video signal supplied thereto from the video signal generating circuit 102. A video signal from the monitor signal generating circuit 103 is supplied to and displayed on a monitor 104. Simultaneously, the video signal from the monitor signal generating circuit 103 is outputted from a monitor output terminal 107 to a suitable display apparatus such as an external monitor as a monitor signal. A control input panel 161 includes a recording start SW (switch), a retrieval SW (switch) or the like. A control circuit 160 is adapted to control the recording of encoded video signal data, the reproduction of an image obtained by decoding the video signal data and the like in response to an input entered from the control input panel 161. An information display signal generating circuit 162 generates an information display signal which enables the state of the control circuit 160, the inputted state of the control input panel 161 and a list of files recorded on the recording media 150 to be displayed on the monitor 104 and a monitor (not shown) connected to the monitor output terminal 107.

An operation of the video signal recording and reproducing apparatus according to this embodiment will be described below. As shown in FIG. 2, when the control circuit 160 receives a moving picture recording start signal from the recording SW (not shown) provided on the control input panel 161, the video signal generating circuit 102 generates a video signal based on the image pickup signal from the imaging device 101. The video signal outputted from the video signal generating circuit 102 is compression-encoded by the video signal encoding circuit 110, and then converted by the recording file generating circuit 130 into a recording file.

When a moving picture signal is recorded according to the MPEG1 format, the moving picture signal is compression-encoded according to the MPEG1 format while a luminance signal and color difference signals are inputted from the video signal generating circuit 102, thereby generating a so-called bit stream based on the resultant data. Thus, the file is recorded on the recording media 150 through the file input/output circuit 140.

In the case of a still picture signal, the still picture of the JPEG format is compression-encoded, and then recorded on the recording media 150. In this case, although the moving picture and the still picture are different from each other in compression system and they are processed by different methods, image compression-coding functions thereof are collectively demonstrated for simplicity, and hence the video signal encoding circuit 110 need not be described separately as a still picture signal encoding circuit and the moving picture signal encoding circuit. The reason for this is that the manners in which the JPEG and MPEG format signals are encoded and decoded are well-known techniques and that the present invention provides that a user-friendliness of a retrieval and a playback executed when still picture data, moving picture data and audio data are recorded in a recording media of a large storage capacity and a recording media such as an HDD (hard disk drive) which can be randomly accessed can be improved. Hence, in the block diagram of FIG. 2, it is sufficient that only the sequential order in which signals are generated is made clear.

When a compression file of a moving picture is recorded on the recording media 150 by the file input/output circuit 140, the control circuit 160 adds information indicative of written file in the recording order contents file 152 which retains a history of the recording order of the same file and corrects the recording order contents file 152. In this manner, the history of the recording order of the information files such as image data recorded on the recording media 150 is stored in the recording order contents file 152. At the same time, the control circuit 160 updates information of information file groups stored in the media by updating the media file management information 151 which manages the location of media within the information file group 153 of the recording media 150. As disclosed in Japanese Patent Application laid-open No. JP-A-5-27983, this processing corresponds to a processing for managing recording files by updating an FAT (File Allocation Table) which is a table used to manage the situation in which a disk is used in an MS-DOS (Microsoft Disk Operating System, trade mark). However, since the gist of the present invention lies in how to improve a user-friendliness of retrieval and reproduction of recording media by reproducing files based on the allocation order and the allocation groups of information recorded on the recording media, the arrangement of media file management information that has been already used in the HDD, a floppy disk and the like need not be described.

Then, when the playback SW (not shown) of the control input panel 161 is depressed and the user instructs the reproduction of the video signal, the control circuit 160 extracts a desired file from the information file group 153 through the file input/output circuit 140. A decoding signal is generated from the extracted file by the decoding signal generating circuit 131, and then inputted to the video signal decoding circuit 111. After the video signal decoding circuit 111 decodes the decoding signal to generate the original video signal, the resultant original video signal is outputted through the monitor signal generating circuit 103 to the monitor 104 and the like and thereby a reproduced picture is displayed, Also in this case, audio data is outputted through the audio signal decoding circuit 121 to the speaker 106 and the like as an audio signal.

Similarly to the aforementioned recording, the arrangement in which the same video signal is decoded by the video signal decoding circuit 131 when the information is both the still picture and the moving picture is simplified.

As described above, the control circuit 160 records and reproduces a video signal and an audio signal in accordance with an instruction from the control input panel 161.

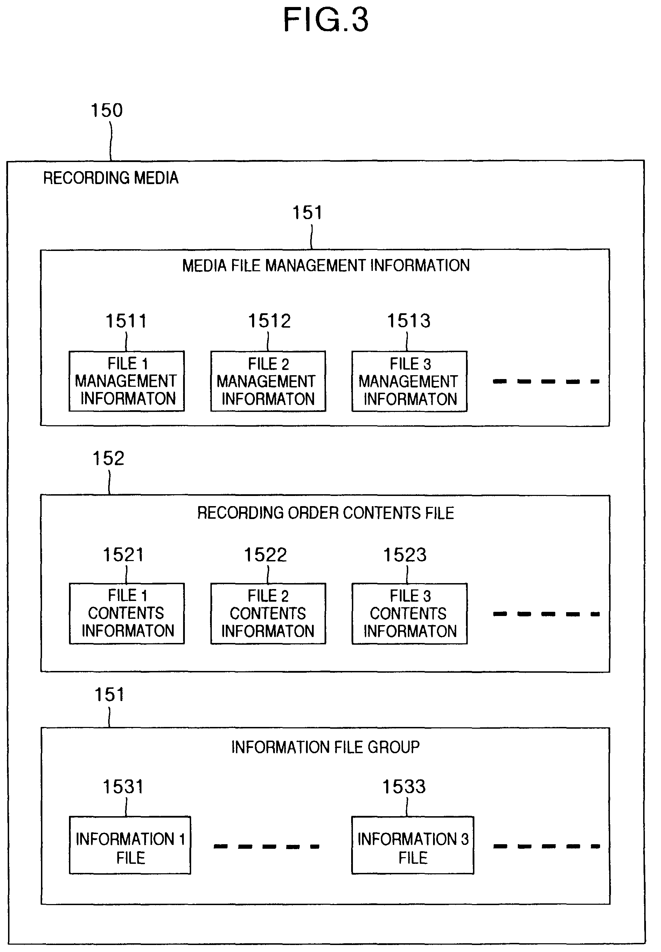

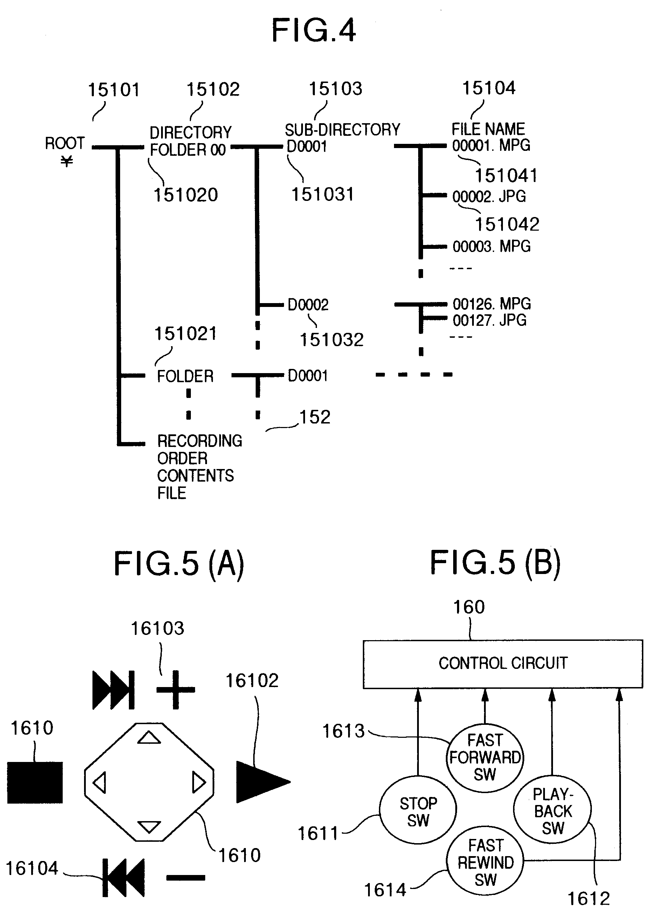

FIG. 3 is a schematic diagram showing the recording media 150, and FIG. 4 is a diagram used to explain the media file management information. Data arrangement of information contained in the recording media 150 necessary for realizing an operation of the embodiment according to the present invention will be described with reference to FIGS. 3 and 4.

Referring to FIG. 3, in the media file management information 151, there are written information indicative of a position at which a file is stored, a name of a recorded file, a time at which a file is created and the like. Management information of a file 1, file 2, ... are designated by file 1 management information 1511, file 2 management information 1512,..., respectively. Files on the recording order contents file 152 record histories of the recording order of files recorded on the recording media 150. If the recording order is in the sequential order of file 1, file 2, ..., then file 1 information 1521, file 2 information 1522, ..., are sequentially written in the recording order contents file 152 in the suitable form such as text data.

FIG. 4 is a schematic diagram of a tree structure showing files in the MS-DOS (registered trade mark) directory structure based on the media file management information 151. In this embodiment, if a so-called root is designated by reference numeral 15101, then there are created directories of names such as a folder 00 denoted by reference numeral 151020, a folder 91 denoted by reference numeral 151021, ..., in the hierarchy of directory shown by reference numeral 15102. Similarly, in the hierarchy of a sub-directory denoted by reference numeral 15103, there are created directories of names such as D0001 denoted by reference numeral 151031, D0002 denoted by reference numeral 151032, ... Under each directory, there is located a video information file that is to be recorded and reproduced. In FIG. 4, reference numeral 15104 designates a file name. A file denoted by reference numeral 151041 represents MPEG data of which the file name is 00001. In this case, in order to show that this data is MPEG image, a file extension identifier is denoted as MPG. This is also true in the following description and therefore need not be described. In this case, the recording order contents file 152 is indicated as a file of the root 15101.

According to the above-mentioned arrangement, the file structure within the recording media 150 is recorded by the media file management information 151, and information indicative of the recording order is recorded by the recording order contents file 152 provided within the recording media 150.

The manner in which an image or the like are reproduced by using these information will be described next.

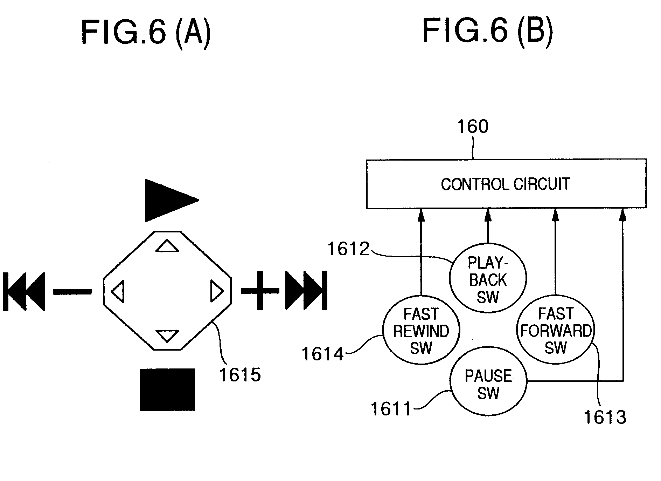

FIGS. 5(A), 5(B) and FIGS. 6(A), 6(B) are schematic diagrams showing the embodiment of operation switches which are attached on the control input panel in order to instruct the playback. In FIG. 5(A), reference numeral 1610 designates an operation member including switches disposed in the four directions. In FIG. 5(B), reference numeral 1611 denotes a stop SW (switch), reference numeral 1612 denotes a playback SW, reference numeral 1613 denotes a fast-forward SW, and reference numeral 1614 denotes a fast-rewind SW. Switch signals from these switches 1611, 1612, 1613, 1614 are outputted to the control circuit 160. Although the fast-rewind SW 1614 is the same as that is generally used as a rewind SW in a VTR, it is denoted as a fast-rewind switch because an assumed recording media is different from a tape media. With respect to reference numeral around the operation member 1610 in FIG. 5(A), reference numeral 16101 denotes a stop SW, 16102 denotes a playback SW, 16103 denotes a fast-forward SW, and reference numeral 16104 denotes a fast-rewind SW.

A symbol "+" in the fast-forward SW 16103 is added in order to designate a file located in the upper direction of the display when a file list is displayed by the information display signal generating circuit 162. Also, a symbol "-" in the fast-rewind SW 16104 is similarly added in order to designate a file located in the lower direction of the display when a file list is displayed by the information display signal generating circuit 162.

FIGS. 6(A) and 6(B) are schematic diagram showing the case in which the location of the switches is different. Since it is customary that the upper direction or the right-hand direction is denoted by "+" in the graph of XY axes, for example, the switches are located as shown in FIGS. 6(A), 6(B) so as to facilitate the similar analogy.

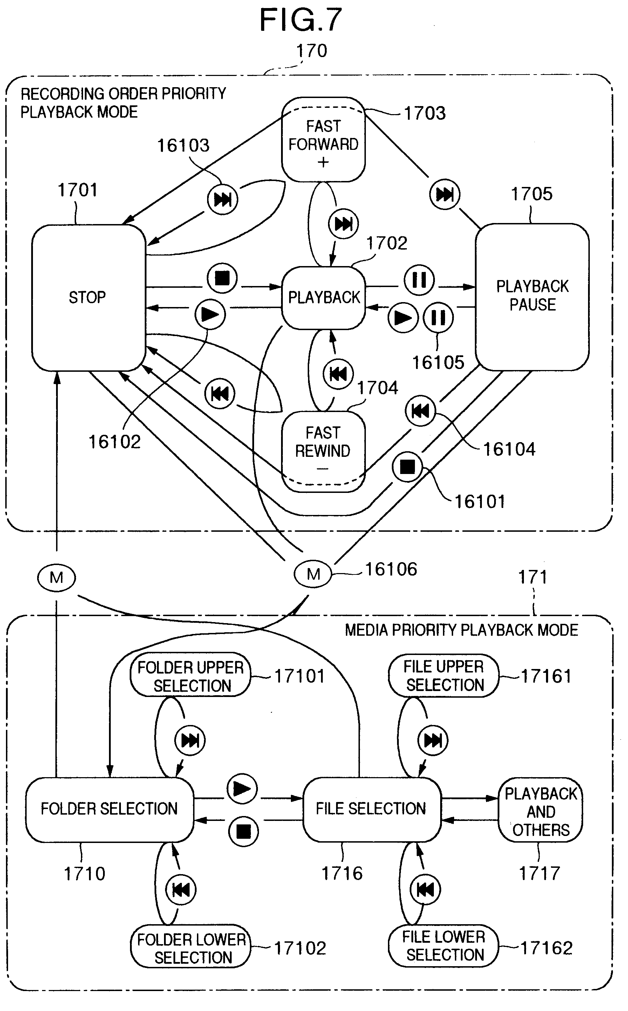

FIG. 7 is a transition diagram showing the embodiment in which the operation of the recording and reproducing apparatus is moved with a time when the recording and reproducing apparatus having the configuration shown in FIG. 2 is operated in the reproducing mode in the sequential order of the recording or the sequential order of the location on the media.

In FIG. 7, reference numeral 170 denotes a transition of a recording order priority playback mode, and reference numeral 171 denotes a transition of a media priority playback mode. The respective modes are changed-over by a playback mode change-over switch (not shown) located on the control input panel 161. Reference numeral 16106 denotes a playback change-over switch, and schematically represents the depression of the playback change-over switch in the transition diagram of FIG. 7. In this embodiment, symbol "M" is attached to the playback change-over switch 16106 in order to express a switch which selects the media priority playback mode.

In this embodiment, it is demonstrated that the state is moved with a time when the playback mode change-over SW 16106 is depressed. Each time the playback mode change-over SW 16106 is depressed, the playback mode is switched between a stop state 1701 and a folder selection state 1710.

In FIG. 7, the reference numerals used in FIG. 5A are used one more time, and transitions are denoted by corresponding reference numerals. Accordingly, reference numeral 16101 denotes a depression of the stop SW, reference numeral 16102 denotes a depression of the playback SW, reference numeral 16103 denotes a depression of the fast-forward SW, and reference numeral 16104 denotes a depression of the fast-rewind SW. Reference numeral 16105 denotes a depression of a pause SW (not shown). To avoid a complexity for denoting respective switches with reference numerals, the switches denoted by the same reference numerals are designated by the same reference numerals.

When respective switches are discriminated, if respective reference numerals indicative of symbols of the switches accompanying with the state presented when the state is designated are designated, then the transition of the operation can be expressed clearly. Therefore, even when the same reference numeral is added, there is then presented no trouble.

In the recording order priority playback mode, since the recording order is recorded on the recording order contents file shown in FIG. 2, a moving picture, a still picture and the like are reproduced based on this file. Referring to FIG. 7, when the playback SW 16102 is depressed under the stop state 1701, the operation of the recording and reproducing apparatus is moved to the playback state 1702. In a like manner, when the fast-forward SW 16103 is depressed under the stop state 1701, the operation of the recording and reproducing apparatus is moved to and placed in the fast-forward state 1703 during a period in which the fast-forward SW 16103 is depressed. When the fast-forward switch 16103 is released from the depression, the operation of the recording and reproducing apparatus is returned to the stop state 1701. When a moving picture file is played back, if a fast-forward SW 17603 is depressed, then the recording and reproducing apparatus reproduces a moving image in a fast-forward mode similarly to the ordinary tape media.

After the file is reproduced to its end in the fast-forward mode during a moving picture is being reproduced, a file that was recorded on that file is identified and detected from the recording order contents file 152 within the recording media 150. Then, the detected file is read out from the information file group 153 and then reproduced in the fast-forward mode. If the identified and detected file that was thus read out from the information file group 153 is data of a moving picture, then data on that file is decoded and reproduced in the fast-forward mode. On the other hand, if the above-mentioned file is data of a still picture, then after a still picture is displayed in a short period of time, the next file is searched for and reproduced from the recording media 150. A playback pause state 1705 and a rewind state 1704 are similar to those described above, and hence need not be described.

As described above, in the recording order priority playback mode 170, the image recorded on the recording media 150 can be reproduced based on the recording order contents file 152 as if an image recorded on the video tape were reproduced.

The embodiment of the media priority reproducing mode 171 will be described next. In the media priority reproducing mode 171, reference numeral 1710 denotes a folder selection state which selects a folder set in the directory 15102 shown in FIG. 4, and reference numeral 1716 denotes a file selection state which selects the file set in the file name 15104. In the recording order priority generating mode, if the reproducing mode change-over SW 16106 is depressed when the recording and reproducing apparatus is set in the stop mode 1701, the playback mode 1702 or the playback pause mode 1705, then the recording and reproducing apparatus is moved to the folder selection state 1710 within the media priority reproducing mode 171. Within the media priority reproducing mode 171, if the reproducing mode change-over SW 16106 is depressed under the condition that the recording and reproducing apparatus is set in the folder selection state 1710 or the file selection state 1716, then the recording and reproducing apparatus is moved to the stop mode 1701 of the recording order priority reproducing mode. According to the media priority reproducing mode 171, the image recorded in a media is reproduced in accordance with the media file management information shown in FIG. 4.

Since the file is classified based on the folders as described with reference to FIG. 4, one folder is considered as one tape and reproduced at the folder unit. Accordingly, on the basis of a principle in which a recorded image is reproduced immediately in the same way as the tape media is reproduced, the information display signal generating circuit 162 displays a file and controls the reproducing order.

In the folder selection state 1710, with respect to the list of the folder names, the control circuit 160 reads out folder information set in the recording media 150 from the media file management information through the file input/output circuit 140 and displays the folder information thus read out through the information display signal generating circuit 162. The list of displayed folder names displays the folder 0, the folder 1, ..., from the upper direction to the lower direction. With respect to the displayed folders, the folders in the upper direction are selected by the fast-forward SW 16103, and the folders in the lower direction are selected by the fast-rewind SW 16104, which are respectively shown by the folder upper selection 17101 and the folder lower selection 17102.

When the folder is selected, the displays of the marks "+" and "-" are attached to the fast-forward SW and the fast-rewind SW as shown in FIG. 5A or 6A, it is easy for the user to understand the operations. Incidentally, if the folder itself is determined previously, then the recording media 150, of course, need not be read out but files may be outputted from the list immediately.

After the folder is selected as described above, the reproducing SW 16102 is depressed, and the recording and reproducing apparatus is moved to the file selection state to select a file to be reproduced. When the file to be reproduced is selected, similarly to the case in which the folder is selected, the control circuit 160 reads out a file from the recording media 150, and the information display signal generating circuit 162 displays a list.

As shown by the file names in FIG. 4, when the numbers are allocated in the sequential order of the recording, the file names are not important. Thus, if data indicative of time and date of the recording are displayed instead of the file names, then this becomes useful for the user to select the file.

Upon display, the latest file recorded on the folder is displayed so as to be located at the uppermost position of the display screen. Specifically, since a file located at the lowermost position within the folder in the directory structure shown in FIG. 4 is generally the latest added file, the file located at the lowermost position is displayed so as to be located at the uppermost position of the display list on the screen. If the file is displayed as described above, then the user can immediately identify the file displayed on the uppermost position as the latest recorded information. Thus, the recording order priority reproducing mode 170 and the media priority reproducing mode can be matched.

When a file is selected, a file in the upper direction is selected by the fast-forward SW 16103, and a file in the lower direction is selected by the fast-rewind SW 16104, which are respectively shown by a file upper selection 17161 and a file lower selection 17162 in FIG. 7. If the reproducing SW 16102 is depressed in the file selection state 1716, then a selected file is reproduced and outputted to the monitor or the like.

Incidentally, in the file selection 1716, if information according to the media file management information 151 or the recording order contents file 152 within the recording media 150 is described together with the file name, then it becomes easy for the user to identify the files as described above. Furthermore, if a reduced picture, i.e. so-called thumbnail is added to the file as the occasion demands, then the user can immediately learn the contents of the file, which can considerably improve the user-friendliness of the recording and reproducing apparatus.

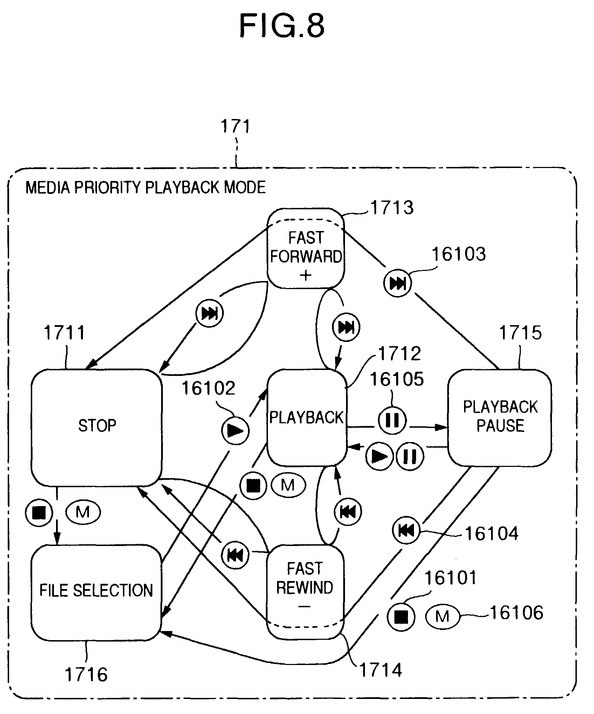

The embodiment of the file selection will be described more in detail with reference to FIG. 8. In FIG. 8, elements and parts identical to those of FIG. 7 have the same functions as those of the elements and parts shown in FIG. 7. In FIG. 8, reference numeral 1711 denotes a stop state in the media priority mode 171, reference numeral 1712 denotes a playback state, reference numeral 1713 denotes a fast-forward state, and reference numeral 1714 denotes a fast-rewind state, respectively.

In the file selection 1716, when the reproducing SW 16102 is depressed after a file was selected, the recording and reproducing apparatus moves to the reproducing mode 1712 and reproduces the file. If the pause SW 16105 is depressed in the reproducing mode 16102, then the recording and reproducing apparatus moves to the pause mode 1715. The operations of these switches are the same as those of the recording order priority reproducing mode of FIG. 7, and therefore need not be described in detail.

A difference between FIGS. 7 and 8 will be described below. In the media priority reproducing mode, since the user selects and reproduces the file within the media with a priority, if the reproducing mode change-over SW 16106 is depressed, when the recording and reproducing apparatus is set in the stop mode 1711, the reproducing mode 1712 and the reproducing pause mode 1715, the recording and reproducing apparatus returns to the file selection state 16716 and can immediately execute the file selection.

Further, in the previous recording order priority mode, if the stop SW 16101 is depressed during playback, the recording and reproducing apparatus is moved to the stop mode. In the media priority reproducing mode according to the present invention, in such case, the recording and reproducing apparatus understands that the next picture should be selected, and is moved to the file selection picture 1716. In other cases, the recording and reproducing apparatus according to the present invention executes a control conforming to the recording order priority reproducing mode. While data is reproduced at the folder unit in the media priority reproducing mode as described above, in this case, it is natural that a file should be moved between the folders or that the order of the files should be changed.

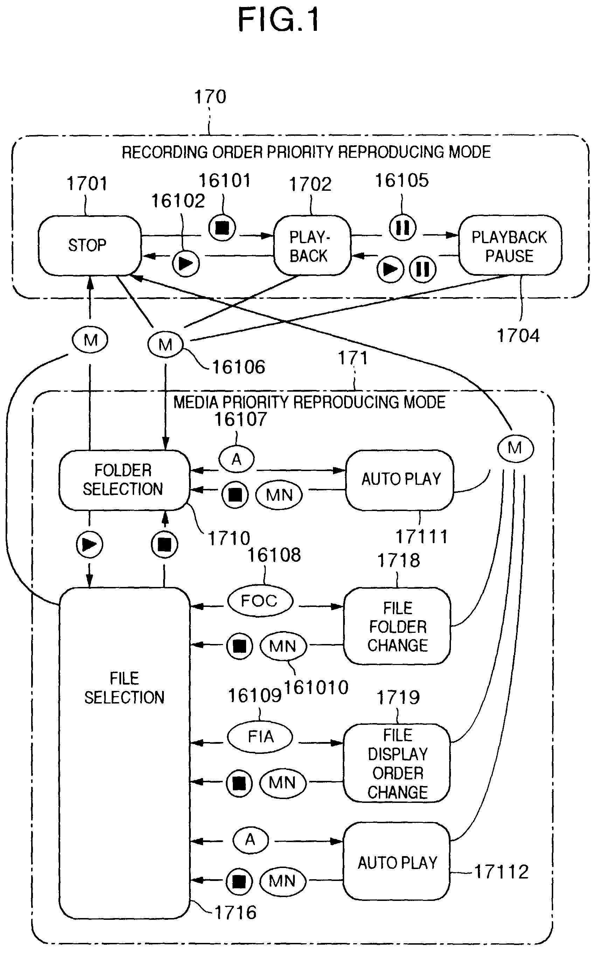

An embodiment of such case will be described below with reference to FIG. 1.

In elements and parts in FIG. 1, elements and parts identical to those of FIG. 7 or 8 are marked with the same references and have the same functions as those of FIG. 7 or 8. Referring to FIG. 1, in the file selection state 1716, when a file folder change SW (not shown) is depressed, the recording and reproducing apparatus is moved to the file folder change state 1718. In FIG. 1, the operation in which the file folder change SW is depressed is designated by reference numeral 16108. The folder change SW is abbreviated by "FOC". Incidentally, this SW is not limited to a single SW like the reproducing SW 16102 but may be a software SW (switch).

With respect to the software SW, there is provided a menu selection SW (not shown). When this menu selection SW is depressed, a menu selection display is outputted. On the menu selection screen, there is displayed a list of items such as the selection of the change of the folder. When a file is selected, if a selected item is determined by the reproducing SW 16102 after the item was selected by using the fast-forward SW 16103 and the fast-rewind SW 16104 similarly to the method of selecting the file, then such a software switch can be realized with ease.

In the file folder change mode 1718, similarly to the preceding method in which the file is selected in the file selection state 1716, a list of files is displayed on the displayed picture, and selected by the fast-forward SW 16103 and the fast-rewind SW 16104.

As described above, the recording and reproducing apparatus has to be moved to the state in which a folder number of a file moving destination can be selected after the folder change file was selected. To this end, the recording and reproducing apparatus is moved by depressing the reproducing SW 16102. If so, the user can designate the folder number without letting go of the operation member. The folder number can be selected by using the fast-forward SW 16103 and the fast-rewind SW 16104 similarly to the case in which the file is selected.

As described above, after the file and its folder were selected, the change of the file folder is determined by depressing the recording SW (not shown). In general, the recording SW is one of the most important switches of the recording and reproducing apparatus and is generally set as an independent switch. Accordingly, if this recording switch is utilized effectively, then the addition of a new switch is not necessary. When a folder of a file recorded within the recording media 150 is changed, the recording media 150 has to be rewritten, and hence to use the recording SW that is provided as a trigger for rewriting the recording media 150 is consistent with the function of SW. Although the SW is operated from the above-mentioned standpoint, it is needless to say that there may be provided other SW or a reproducing SW may be used if necessary.

Incidentally, each state may be returned to the preceding state by depressing the stop SW 16101. Further, each state may be returned to the first folder selection state by depressing the folder change SW 16108 or the aforementioned menu selection SW.

The manner in which the display order of files is changed will be described next. Similarly to the case in which the file folder is changed, the state is moved to the file display order change state 1719 by depressing a file display order change SW (not shown). In FIG. 1, reference numeral 16109 designates an operation for depressing the file display order change SW. In FIG. 1, the symbol of the file display order change SW is abbreviated as "FIA". Of course, it is needless to say that the state may be moved to the file display order change state 1719 by the software SW using the aforementioned menu selection SW.

After the state was moved to the file display order change state 1719 as described above, a target file of which the order should be changed is selected by the fast-forward SW 16103 and the fast-rewind SW 16104, and then the file selection is determined by the reproducing SW 16102.

Then, the file position is designated by depressing the fast-forward SW 16103 and the fast-rewind SW 16104. As a method of designating the file position, if the selected file is moved on the screen on which a list of recorded files is displayed, then it is possible for the user to easily designate the file position by visually confirming the file position.

When the file position is determined, similarly to the case in which the folder is selected, the changed result is written in the recording media 150 by depressing the recording SW and the file display order change is made definite. The file display order change is executed by rewriting information in the media file management information 151 of the recording media 150 similarly to the case in which the folder is changed.

In this manner, the file folder is changed and the file display order within the folder is changed.

An embodiment in which a reproducing state similar to the reproducing state 1702 in the recording order priority reproducing mode 170 is realized by the media priority reproducing mode 171 will be described next. Specifically, the recording and reproducing apparatus is arranged such that files recorded on the recording media 150 are reproduced sequentially. This embodiment will be described with reference to FIG. 1.

As mentioned before, since it is a first object of the media priority reproducing mode to retrieve, designate and reproduce a file recorded on the media, the selected file is reproduced, and other files are not reproduced so long as an instruction is not issued by operating the operation member, e.g. the fast-forward SW 16103 is not depressed. Therefore, similarly to the reproduction of the tape media, there is realized a reproducing state in which, initially, files are reproduced in the sequential order of old files similarly to the recording order priority mode in such a manner that files may be reproduced in the sequential order of old files in the recording order priority reproducing mode. If necessary, the reproduction can be continued while files are sequentially updated such that files can be reproduced even though the sequential order is set freely and without the input of a new instruction.

To realize the above-mentioned reproducing state, there is used the media file management information 151 recorded on the recording media 150. In the aforementioned file selection state, when the information display signal generating circuit 162 displays a list, the last file of the file name 15104 within the folder shown in FIG. 4 is displayed on the highest-order position of the display list, and with respect to the files within the folder, the latest recorded file is located at the last position. Therefore, so long as the file location is not changed, the latest file is located at the highest-order position of the file selection list. Accordingly, in the reproduction of the folder unit, if files are sequentially reproduced from the file located at the highest-order position of the file selection list, then similarly to the reproduction state 1702 of the recording order priority reproduction mode 170, it is possible to realize the reproduction state in which recorded files can be sequentially and continuously reproduced in the order of oldest files.

Moreover, if the file is exchanged in the file selection, then files can be continuously reproduced based on the replaced result. Furthermore, if a file is selected in the file selection and files are continuously reproduced from the selected file, then files located behind the selected file and which are located at the upper direction of the list can be sequentially selected and reproduced.

This state is the state denoted by reference numerals 17111, 17112 in the media priority reproducing mode 171, and will hereinafter be referred to as "auto play". The recording and reproducing apparatus is moved to this state by depressing an auto play selection SW 16107.

The auto play selection SW is abbreviated as "A". Incidentally, it is needless to say that this auto play selection SW is not limited to the single SW but may be realized by a software SW.

The auto play will be described more fully below.

According to the auto play 17111 in the folder selection 1710, if the recording and reproducing apparatus is moved to the auto play after a folder was selected from the folder list displayed on the screen in the folder selection state 1710, the auto play 17111 starts reproducing files from the highest-order position to the lowest-order position of the file layout within the folder shown by the tree structure of FIG. 4. After the reproduction of all files is ended, the auto play 17111 is stopped at the reproduction of the last file. According to this function, if folders in which the reproducing order of files is set by using the file folder selection and the file location change are generated in a specific folder, then a reproduction display that can be programmed freely becomes possible, and hence the recording and reproducing apparatus becomes more convenient.

According to the auto play 17112 in the file selection 1711, if the recording and reproducing apparatus is move to the auto play after a file was selected from the file list displayed on the screen in the file selection state 1716, then the auto file 17112 reproduces a file selected within the folder shown by the tree structure of FIG. 4 as the first reproduced file and starts reproducing files toward the lowest-order position of the file layout. After the reproduction of all files is ended, the auto play 17112 is stopped at the reproduction of the last file. According to this function, it becomes possible to reproduce a file from an arbitrary layout position of the folder.

The functions and operations of the file folder selection 1718, the auto play 17111 and the like have been described so far in which the recording and reproducing apparatus is moved to such state by depressing the file folder change SW 16108 and the auto play SW 16107 or based on the software SW using the menu selection SW. When the recording and reproducing apparatus is returned from these states, the recording and reproducing apparatus can be returned to the original state by depressing the menu selection switches shown by the stop switches 16101, 161010 although the menu is abbreviated as "MN". Further, if it is arranged such that the recording and reproducing apparatus is moved from the media priority reproduction mode to the stop state 1701 of the recording order priority reproduction mode 170 by the reproduction mode switch 16106, then it becomes possible to realize a switch function similar to the switch function described with reference to FIG. 7.

While the embodiment concerning the file continuous reproduction which begins with the folder unit or the file within the folder has been described so far, as a similar function, there is a well-known function for automatically reproducing a CD (compact disc) in the instructed order in a CD player or the like, e.g. so-called program playback function. According to the program playback function, displayed numbers of music programs in the CD are selected and the CD is reproduced in the sequential order of the selected numbers of the music programs. Since the number of the music programs that can be reproduced by the conventional CD player is limited, the user is able to easily decide the order of playback, i.e. to set a program by a simple operation such as the selection of the numbers. However, in order to set a playback program for reproducing several 1000s of image files recorded within a data recording media of a large storage capacity, the above-mentioned simple method used by the CD player is not suitable.

On the other hand, according to the present invention, since the recorded files can be visually confirmed on the list displayed on the screen and the files also can be rearranged on the list displayed on the screen, even when all files cannot be displayed on the screen at the same time, the programmed files can be corrected while they are visually confirmed. In addition, files, which are once programmed, are recorded on the media file management information so that, even when a similar recording and reproducing apparatus reproduces the recording media, such a recording and reproducing apparatus becomes able to reproduce the recording media in the similar reproduction order.

Since the present invention relates to the recording and reproducing apparatus and this recording and reproducing apparatus records data on the recording media accompanying with the apparatus and reproduces recorded data from the recording media, a history in which data is recorded on the recording media is very important for the user. Therefore, for the purpose of reproducing images that are sequentially and continuously recorded on the tape media, the recording order contents file 152 is updated and changed each time an image or the like is recorded, and the recorded image or the like is reproduced in the sequential order of the recording based on the updated recording order contents file 152.

Accordingly, in order to realize this image in the media priority reproducing mode, there are set the auto plays 17111, 17112 which are arranged so as to reproduce data in the sequential order of the recording so long as the order of files is not changed.

In accordance with the auto play, as described above, when an image or the like is recorded and a recorded image is reproduced as it is or when files are temporarily rearranged after an image or the like was recorded, new files exist in the upper direction of the file list displayed on the screen, and files in the upper directions, i.e. files from the old direction to the new direction are constantly reproduced. The reason for this is that, if an image of this recording and reproducing apparatus is modeled after an image of an operation of an existing recording and reproducing apparatus, e.g. an 8-mm movie camera using a magnetic tape, then it becomes possible for the user to obtain an operation method with ease, thereby improving an operability of the recording and reproducing apparatus.

Specifically, what the image of the operation method follows the conventional products is that the user is able to operate a recording and reproducing apparatus of a new system by an assumption obtained from conventional equipment. This can achieve a large convenience when the user handles a recording and reproducing apparatus.

Further, the reproducing method has been described so far, and the present invention is not limited thereto. The following variant is of course possible. That is, there is provided a pause SW on the control input panel 161. When this pause SW is depressed, the reproducing state in the auto play 17111 or the reproducing state in the auto play 17112, the reproducing state 1702 in the recording order priority reproducing mode 170 and the reproducing state in the media priority reproducing mode 171 are paused. When the pause SW or the reproducing SW is depressed after the reproducing state was paused, the reproduction may be resumed from the position of the data of the paused file. Incidentally, when the reproduction is resumed from the pause mode, if the reproduction of a file of a moving picture is resumed from the paused still scene or the reproduction of a still picture is resumed from the same still picture in the file of the still picture, then there can be improved an operability.

As described above, according to the present invention, since there is provided the recording order management file, data can be reproduced at any time in the sequential order of the recording as a tape image after the recording media was edited. Also, since there is provided the means which can rearrange the list in which files are arranged in the sequential order of new recording into a list in which files are arranged in the arbitrary reproducing order or which can move and set files to another folder, it becomes possible to set the automatic reproduction in the programmed order by a simple operation. Thus, when image data of a large amount are selected and reproduced, it is possible to realize a digital video and audio recording and reproducing apparatus of which the operability can be improved.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications to fall within the ambit of the appended claims.

## Claims

1. A video signal recording and reproducing apparatus comprising:
compression-encoding means (110, 120) for compression-encoding a moving picture video signal and an audio signal or a still picture signal to provide moving picture video data and audio signal data or still picture signal data;
reproduction-decoding means (111, 121) of a moving picture video signal for reproduction-decoding signal data such as compression-encoded moving picture video signal data and audio signal data or still picture signal data;
a recording medium (150) in which signal data compressed by said compression-encoding means (110, 120) is recorded;
recording means (140) for recording the signal data compressed by said compression-encoding means on said recording medium;
recording order management data recording means (130, 160) for recording recording order management data (152), which is a recording order of said signal data, on said recording medium (150);
first reproducing means (160) for reproducing said signal data in the recording order by reproduction-decoding means (111, 121) based on the recording order management data (152) recorded by said recording order management data recording means;
location information data recording means (140) for recording location information data (151) designated by a user on said recording medium (150); and
second reproducing means (160) for reproducing said signal data by a reproduction-decoding based on the location information data (151) previously recorded on said recording medium (150).

2. A video signal recording and reproducing apparatus according to claim 1, further comprising stop, reproduction, fast-forward and fast-rewind instruction input means (161) and wherein said first reproducing means (160) starts reproducing signal data recorded immediately before the reproduction when said signal data is reproduced by a reproduction instruction of said input means (161) immediately after said signal data is recorded, said first reproducing means (160) reproduces selected signal data other than signal data provided immediately after the recording in response to a fast-forward or fast-rewind instruction of said instruction input means (161), sequentially retrieves said recording medium (150) based on said recording order management data (152) and reproduces signal data recorded on the next time point of a time point at which said selected signal data is recorded after the reproduction of said signal data selected by said instruction is executed, and said first reproducing means (160) executes a reproduction until the reproduction of signal data recorded immediately before said reproduction is ended.

3. A video signal recording and reproducing apparatus comprising:
compression-encoding means (110, 120) for compression-encoding moving picture video signal and audio signal or a still picture signal to generate moving picture video signal data and audio signal data or still picture signal data;
reproduction-decoding means (111, 121) of a moving picture video signal for reproduction-decoding said compression-encoded moving picture video signal data and audio signal data or still picture signal data;
a recording medium (150) in which the moving picture video signal or still picture video signal and audio signal compressed by said compression-encoding means (110, 120) and having more than two signal data archiving areas;
means (140) for locating and recording signal data of the moving picture signal or the still picture video signal and the audio signal at the position next to the position of said signal data recorded on said signal data preserving areas;
signal data preserving area moving means (160) for enabling a user to move said signal data to an arbitrary preserving area; and
area unit automatic reproducing means (140, 160) for sequentially reproducing first signal data within said preserving area when a user designates the preserving area.

4. A video signal recording and reproducing apparatus according to claim 3, wherein said preserving area is a preserving area designated by a folder.

5. A video signal recording and reproducing apparatus according to claim 3, further comprising:
preserving area moving and locating means (140, 160) for enabling signal data recorded on said archiving area to be moved to an arbitrary position within said preserving area; and
area file designation automatic reproducing means (140, 160) for selecting specific signal data within said preserving area, sequentially and continuously reproducing signal data from the selected signal data in the sequential order of location after said specific signal data was selected and stopping the reproduction after having reproduced last signal data.

6. A video signal recording and reproducing apparatus according to claim 3, wherein the location of said signal data recorded on said recording medium is a location on management information.

7. A video signal recording and reproducing apparatus according to claim 5, wherein said instruction input means (161) further comprises pause instruction input means (161) and wherein the reproduction of recorded data is paused if said pause instruction input means (161) inputs an instruction when said area unit automatic reproducing means (140, 160) or said area file designation automatic reproducing means (140) reproduces recorded data, and the paused reproduction of recorded data is resumed if said pause instruction input means (161) inputs an instruction or said reproduction instruction is inputted.

8. A video signal recording and reproducing apparatus comprising:
compression-encoding means (110, 120) for compression-encoding a moving picture video signal and an audio signal or a still picture signal to generate signal data such as moving picture video signal data and audio signal data or still picture signal data;
reproduction-decoding means (111, 121) for reproduction-decoding said compression-encoded signal data;
a recording medium (150) in which said signal data is recorded;
recording means (140, 160) for recording said signal data on said recording medium (150);
instruction input means (161) for inputting pause, reproduction, fast-forward and fast-rewind instructions;
displaying means (104) for displaying reproduced said moving picture video signal or said still picture video signal, and displaying data name of signal data of said moving picture video signal and said still picture video signal and a recording condition such as a recording time in the form of a list in accordance with the location at which said signal data are recorded on said recording medium (150); and
selecting and designating means (160) for selecting and designating said displayed signal data by said instruction input means (161).

9. A video signal recording and reproducing apparatus according to claim 8, wherein said display means (104) displays names of more than two preserving areas on said recording medium (150) in the form of a list, and said selecting and designating means (160) selects an area from the list of said displayed preserving areas in response to an instruction of said instruction input means (161).

10. A video signal recording and reproducing apparatus according to claim 8, wherein said medium recording means (140, 160) records recording signal data at the position next to signal data that has already been recorded, and said display means (104) displays data located at the end of the preserving area on said recording medium (150) in the upper direction of a screen on which signal data within said preserving areas are displayed in the form of a list.

11. A video signal recording and reproducing apparatus comprising:
a recording medium (150) in which a video signal is recorded;
video signal recording means (140) for recording said video signal on said recording medium (150);
recording order management data recording means (140) for recording recording order management data (152) indicative of a recording order of a video signal on said recording medium (150);
first reproducing means (160) for reproducing a video signal in the sequential order of the recording based on said recording order management data (152);
location information data recording means (140, 160) for location information data designated by a user on said recording medium (150); and
second reproducing means (140, 160) for reproducing a video signal based on said location information data (151).

12. A video signal recording and reproducing apparatus comprising:
compression-encoding means (110, 120) for compression-encoding a moving picture video signal and an audio signal or a still picture video signal to generate moving picture video signal data and audio signal data or still picture video signal data;
moving picture video signal reproduction-decoding means (111, 121) for reproduction-decoding signal data such as said compression-encoded moving picture video signal data and audio signal data or still picture video signal data;
a recording medium (150) in which the signal data compressed by said compression-encoding means (110, 120) are recorded;
recording means (140, 160) for recording the signal data compressed by said compression-encoding means (110, 120) on said recording medium (150);
recording order management data recording means (140, 160) for recording recording order management data (152) indicative of a recording order of said signal data on said recording medium (150);
first reproducing means (140, 160) for reproducing said signal data by said reproduction-decoding means (111, 121) based on said recording order management data (152) recorded by said recording order management data recording means (140, 160);
location information data recording means (140, 160) for recording location information data (151) indicative of a location of said recording medium data different from said recording order management data (152) on said recording medium (150); and
second reproducing means (140, 160) for reproducing said signal data by a reproduction-decoding based on location information data (151) previously recorded on said recording medium (150).

13. A video signal recording and reproducing apparatus comprising:
compression-encoding circuit (110, 120) which compression-encodes a moving picture video signal and an audio signal or a still picture signal to provide moving picture video data and audio signal data or still picture signal data;
reproduction-decoding circuit (111) for a moving picture video signal, which reproduction-decodes signal data such as compression-encoded moving picture video signal data and audio signal data or still picture signal data;
a recording medium (150) in which signal data compressed by said compression-encoding circuit (110, 120) is recorded;
recording circuit (140) which records the signal data compressed by said compression-encoding circuit on said recording medium;
recording order management data recording circuit (130) for recording recording order management data (152), which is a recording order of said signal data, on said recording medium (150);
first reproducing circuit (160) for reproducing said signal data in the recording order by reproduction-decoding circuit (111, 121) based on the recording order management data (152) recorded by said recording order management data recording circuit;
location information data recording circuit (140) for recording location information data (151) designated by a user on said recording medium (150); and
second reproducing circuit (160) which reproduces said signal data by a reproduction-decoding based on the location information data (151) previously recorded on said recording medium (150).

14. A video signal recording and reproducing apparatus comprising:
compression-encoding circuit (110, 120) for compression-encoding moving picture video signal and audio signal or a still picture signal to generate moving picture video signal data and audio signal data or still picture signal data;
reproduction-decoding circuit (111, 121) of a moving picture video signal for reproduction-decoding said compression-encoded moving picture video signal data and audio signal data or still picture signal data;
a recording medium (150) in which the moving picture video signal or still picture video signal and audio signal compressed by said compression-encoding circuit (110, 120) and having more than two signal data archiving areas;
recording circuit (140) for locating and recording signal data of the moving picture signal or the still picture video signal and the audio signal at the position next to the position of said signal data recorded on said signal data preserving areas;
signal data preserving area moving circuit (160) for enabling a user to move said signal data to an arbitrary preserving area; and
area unit automatic reproducing circuit (140, 160) for sequentially reproducing first signal data within said preserving area when a user designates the preserving area.

15. A video signal recording and reproducing apparatus comprising:
compression-encoding circuit (110, 120) for compression-encoding a moving picture video signal and an audio signal or a still picture signal to generate signal data such as moving picture video signal data and audio signal data or still picture signal data;
reproduction-decoding circuit (111, 121) for reproduction-decoding said compression-encoded signal data;
a recording medium (150) in which said signal data is recorded;
recording circuit (140, 160) for recording said signal data on said recording medium (150);
instruction input unit (161) for inputting pause, reproduction, fast-forward and fast-rewind instructions;
displaying device (104) for displaying reproduced said moving picture video signal or said still picture video signal, and displaying data name of signal data of said moving picture video signal and said still picture video signal and a recording condition such as a recording time in the form of a list in accordance with the location at which said signal data are recorded on said recording medium (150); and
selecting and designating circuit (160) for selecting and designating said displayed signal data by said instruction input unit (161).

16. A video signal recording and reproducing apparatus comprising:
a recording medium (150) in which a video signal is recorded;
video signal recording circuit (140) for recording said video signal on said recording medium (150);
recording order management data recording circuit (140) for recording recording order management data (152) indicative of a recording order of a video signal on said recording medium (150);
first reproducing circuit (160) for reproducing a video signal in the sequential order of the recording based on said recording order management data (152);
location information data recording circuit (140, 160) for location information data designated by a user on said recording medium (150); and
second reproducing circuit (140, 160) for reproducing a video signal based on said location information data (151).
